# EUROPÄISCHE PATENTSCHRIFT

(11) **EP 0 891 799 B1**
(45) Veröffentlichungstag und Bekanntmachung des Hinweises auf die Patenterteilung: **06.05.2004**
(21) Anmeldenummer: 97112270.0
(22) Anmeldetag: 17.07.1997
(51) Int. Cl.: B01D 17/00, B03B 9/04, B09B 3/00, C10B 7/10, C10B 47/44, C22B 1/00

(54) **Verfahren und Anlage zur Entölung fettiger Substanzen**
Process and apparatus for de-oiling oil and grease containing materials
Procédé et dispositif pour la dégraissage des matériaux huileux

(43) Veröffentlichungstag der Anmeldung: 20.01.1999
(73) Patentinhaber: Bauknecht, Maximillian, 09130 Chemnitz (DE); Morschett, Peter, 68787 Waldgassen (DE)
(72) Erfinder: Bauknecht, Maximilian, 09130 Chemnitz (DE); Lutze, Hans, Prof., Dr., 09468 Geyer (DE)
(74) Vertreter: Rumrich, Gabriele, Dipl.-Ing.

(56) Entgegenhaltungen:
- EP-A- 0 245 655
- EP-A- 0 373 577
- WO-A-92/12391
- DE-A- 3 816 493
- DE-A- 4 221 347
- DE-A- 4 237 161

## Beschreibung

Die Erfindung betrifft ein Verfahren und eine Anlage zur Entölung fettiger Substanzen wie z.B. Walzzunder, Späne, Schlämme und ölkontaminierte Mineralien nach dem Oberbegriff des ersten Patentanspruchs.

Es sind bereits zahlreiche Anlagen zur Entölung fettiger Substanzen bekannt. Bei einer Gruppe erfolgt dabei die Reinigung der Substanzen durch einen Waschvorgang (DE-A-32 23 011, DE-A-34 32 702, DE-A-41 15 920).

Grundlegender Nachteil ist, daß durch die Anwendung von Waschsubstanzen oft eine erhöhte Umweltbelastung zu verzeichnen ist.

In DE-A-38 16 493 wird ein Verfahren zur Zerlegung eines Ausgangsproduktes, vorzugsweise Walzzunder, in seine Bestandteile beschrieben. Dabei wird das Ausgangsprodukt einer thermischen Behandlung unterzogen. Es wird in metallische und nichtmetallische Feststoffe sowie in dampfförmige bzw. gasförmige Medien zerlegt. Das Ausgangsprodukt wird indirekt beheizt, so daß es nicht mit den wärmetragenden Medien in Verbindung kommt. Die in einem Drehtrommelofen ausgegasten Bestandteile aus dem Walzzunder werden bis auf eine Restgasmenge in eine flüssige Phase überführt. Das Restgas wird abgesaugt und verbrannt bzw. aufbereitet. Die verflüssigte Komponente wird in einer Entölungsanlage auf Restöl filtriert. Das Öl wird gereinigt und der Wiederverwendung zugeführt. Das Wasser wird, bevor man es an die Umwelt weitergibt, biologisch gereinigt und neutralisiert. Die metallischen und nichtmetallischen Feststoffe werden mittels mechanischer und/oder elektromagnetischer Trennverfahren in metallische und nichtmetallische Fraktionen aufgespalten.

Ein weiteres Verfahren und eine Vorrichtung zum Aufbereiten schadstoffbelasteter Abfallstoffe (z.B. Stäube, Schlämme, Walzzunder, Altsand,u. dgl. beschreibt DE-A-41 09 136. Durch Einleitung eines Gases in ein Schüttgutbett wird eine Wirbelschicht erzeugt, die teilweise aus Schüttgut besteht und von oben beheizt wird. Die Beheizungsintensität ist steuerbar, so daß einerseits die Feststofftemperatur und andererseits die sich in dem oberhalb der Wirbelschicht befindlichen Gasraum herrschende Gastemperatur beeinflußbar sind.

Zur Erzeugung der Wirbelschicht wird das Schüttgut einem Wirbelschichtofen zugeführt. Alle bekannten Lösungen sind konstruktiv aufwendig und kostenintensiv.

Aufgabe der Erfindung ist es, ein Verfahren und eine zugehörige Anlage zur Entölung fettiger Substanzen zu entwickeln, das sich durch wenige einfache Verfahrensschritte auszeichnet wobei die zugehörige Anlage einen einfachen Aufbau aufweist und eine zuverlässige Arbeitsweise bei einer hohen Lebensdauer garantiert und mit einem minimalen Energieeinsatz arbeitet.

Diese Aufgabe wird durch die Merkmale des ersten und fünften Patentanspruches und die weiteren Merkmale in deren Unteransprüchen gelöst. Dabei werden verfahrensmäßig die zu entölenden fettigen Substanzen wie z.B. Walzzunder, Späne, Schlämme und ölkontaminierte Mineralien durch indirekte Beheizung einer thermischen Behandlung unterzogen und das durch die thermische Behandlung entstehende Gas abgeleitet. Erfindungsgemäß wird dazu die zu entölende Substanz über eine Fördereinrichtung einem Reaktor zugeführt. Während der Zuführung zum Reaktor erfolgt bei Ausgangssubstanzen mit einem erhöhten Feuchtigkeitsgrad während der Zuführung eine Erwärmung auf ca. 100°C bis 150°C, wodurch diese entwässert wird. Nach der Abführung des entstandenen Wasserdampfes wird dieser durch Abkühlen in die flüssige Phase überführt. Die zu entölenden Ausgangssubstanzen werden nachfolgend einem von außen indirekt beheizten Reaktor zugeführt und in diesem unter einer kontinuierlichen Vorschub- und Umwälzbewegung bei einer Temperatur im Bereich von 280°C bis 400°C erhitzt. Durch diese im Reaktor herrschende Temperatur werden aus der Substanz die Öle und Fette in die gasförmige Phase überführt. Diese Öl- und Fettdämpfe werden abgesaugt und können beispielsweise zur indirekten Beheizung des Reaktors einer Verbrennungs- und Heizeinheit zugeführt werden, wobei dann die weitere Beheizung des Reaktors entweder zusätzlich oder ausschließlich mit den als Abfallprodukt abgeschiedenen Öl- und Fettdämpfen erfolgt. Die anfängliche Beheizung kann in dem Maße verringert werden, wie die Heizleistung durch die mit den Öl- und Fettdämpfen versorgten Verbrennungs- und Heizeinheit steigt. Zur anfänglichen indirekten Erwärmung des Reaktors können als Anschubenergie beispielsweise die Abgase einer industriellen Einrichtung, insbesondere die in einem Walzwerk bzw. Hochofen anfallenden Abgase genutzt werden.

Nach Anlaufen des Entölungsvorganges erfolgt die Zufuhr der Energiemenge für die indirekte Beheizung durch die industrielle Einrichtung und die Zufuhr der Energiemenge für die indirekte Beheizung durch die Verbrennung der gewonnenen Öl-Gas-Phase in Abhängigkeit von der im Reaktor vorhandenen Temperatur über eine entsprechende Regel- bzw. Steuereinrichtung.

Der Durchsatz der zu entölenden Ausgangssubstanz wird in Abhängigkeit von der anfallenden Menge der zu entölenden Substanz festgelegt. Für die Entölung von Walzzunder sollte er zum Beispiel im Bereich von 3-5 Tonnen pro Stunde liegen. Die Durchlaufdauer sollte bei der Entölung von Walzzunder mindestens 20 Minuten betragen. Die für die jeweilige Ausgangssubstanz zur zuverlässigen Entölung erforderlichen Durchlaufzeiten können durch vorherige Versuche leicht ermittelt werden.

Die Anlage zur Entölung fettiger Substanzen wie z.B. Walzzunder, Späne, Schlämme und ölkontaminierte Mineralien ist bekannter Weise mit einer Zuführung für die fettigen Substanzen und einer Ableitung für die entfetteten Substanzen, sowie mit einer Heizeinrichtung ausgestattet. Erfindungsgemäß wird in einem Reaktor (Durchlaufofen) mindestens eine Fördereinrichtung zur Erzeugung einer kontinuierlichen oder diskontinuierlichen Vorschub- und Umwälzbewegung angeordnet. Bei Anwendung von nur einer Fördereinrichtung befindet sich in definiertem Abstand zu einer inneren Wandung des Reaktors eine weitere äußere Wandung, so daß zwischen beiden Wandungen ein Heizraum entsteht, der mit einem Heizmedium, beispielsweise den Abgasen einer industriellen Einrichtung, durchströmt und beheizt wird und somit zur indirekten Beheizung des Innenraumes des Reaktors dient. Die Zuführung der öl- und fetthaltigen Ausgangssubstanzen ist an einem Ende und die Ableitung für die entfetteten Substanzen an dem anderen Ende des Reaktors angeordnet.

Am Reaktor ist weiterhin eine Absaugeinrichtung für die durch die Beheizung entstandenen Öl- und Fettdämpfe vorgesehen, die mit einer an der äußeren Reaktorwandung angeordneten, zur Erzeugung des Heizmediums dienenden, Verbrennungs- und Heizeinheit verbunden ist. Der Reaktor kann vorteilhafter Weise in einem definierten Winkel geneigt sein. Die Absaugeinrichtung befindet sich dann vorteilhafter Weise an dem Ende des Reaktors, welches höher gelegen ist und an welchem die Abführung angeordnet ist.

Die Zuleitung für das Heizmedium in Form der Abgase wird vorzugsweise an dem Ende des Reaktors angeordnet, an welchem sich die Zuführung für die Ausgangssubstanz befindet. Die Ableitung der Abgase erfolgt vorzugsweise am gegenüberliegenden Ende des Reaktors. Die Fördereinrichtung ist in Form einer oder mehrerer Transportschnecken ausgebildet, da mit diesen eine zuverlässige Transport- und Umwälzbewegung der Ausgangssubstanz erzielt wird.

Jede Transportschnecke wird in einem Schneckenmantelrohr geführt. Der Außendurchmesser der jeweiligen Transportschnecke ist dem Innendurchmesser des Schneckenmantelrohres so angepaßt, daß eine zuverlässige Transport- und Umwälzbewegung erfolgt und dabei an der Innenwandung des Schneckenmantelrohres möglichst keine Ablagerung der Ausgangssubstanz erfolgen kann. Zur Abführung der entstandenen Öl- und Fettdämpfe weisen die Schneckenmantelrohre nach oben gerichtete Öffnungen auf. Über den Öffnungen sind zur weiteren Ableitung Profile so über dem Schneckenmantelrohr angeordnet, daß sie mit ihren Außenkannten einerseits dicht anliegen und andererseits zwischen dem Schneckenmantelrohr und dem Profil ein Zwischenraum entsteht. An einem oder mehreren Durchbrüchen der Profile sind die Abgasleitungen angeschlossen, welche die Öl- und Fettdämpfe über die Absaugung zur Verbrennungs- und Heizeinheit führt. Desweiteren weist die Anlage an der Zuführung eine der Entwässerung der Ausgangssubstanz dienende Heizeinheit auf.

Um einen hohen Durchsatz der Anlage auf relativ geringer Stellfläche zu gewährleisten, ist es vorteilhaft, wenn mehrere Transportschnecken in Reihe nebeneinander und/oder übereinander angeordnet werden. Alle Schneckenmantelrohre einer Anlage werden vom Außenmantel des Raktors umschlossen. Der Raum zwischen den Schneckenmantelrohren und dem Außenmantel wird vom Heizmedium durchströmt und dient zur indirekten Beheizung des Ausgangsstoffes, welcher mit den Transportschnecken durch die Schneckenmantelrohre transportiert wird.

Die Erfindung wird nachfolgend an einem Ausführungsbeispiel und zugehöriger Zeichnungen näher erläutert.

Es zeigen:
- Fig. 1:: Prinzipdarstellung einer Anlage unter Anwendung einer Transportschnecke
- Fig. 1a:: Schnittdarstellung entlang der Linie A-A gem. Fig. 1
- Fig. 2a:: Prinzipdarstellung einer Anlage unter Anwendung von drei Transportschnecken im Längsschnitt
- Fig. 2b:: Seitenansicht gem. Fig. 2a
- Fig. 2c:: Draufsicht gem. Fig. 2a
- Fig. 3:: Steuer- bzw. Regelprozeß

Die zu entölende Ausgangssubstanz SA gelangt über eine Zuführung 1 in den Reaktor 2. Zur Entwässerung von Ausgangssubstanzen SA mit relativ hohem Feuchtigkeitsgrad, z.B. von nassem Walzzunder, ist der Zuführung 1 eine Heizeinheit 3 zugeordnet, in welcher die Ausgangssubstanz auf eine Temperatur im Bereich von ca. 100°C bis 150°C erwärmt wird. An der Zuführeinrichtung 1 ist dann auch eine Ableitung 4 für den entstehenden Wasserdampf vorgesehen, der anschließend in die flüssige Phase überführt wird. Im Reaktor 2 wird die Ausgangssubstanz SA durch eine Transportschnecke 5 vorwärts bewegt und umgewälzt und auf eine Temperatur im Bereich von 280°C bis 400°C erwärmt. Durch die hohe Temperatur werden die in der Ausgangssubstanz SA vorhandenen Öle und Fette in den gasförmigen Aggregatzustand überführt. Mit einer Absaugeinrichtung 6 werden die entstandenen Öl- und Fettdämpfe abgesaugt und einer am Reaktor 2 angeordneten Verbrennungs- und Heizeinheit 7 zugeführt. Am anderen Ende werden die entfetteten Substanzen SE über eine Abführung 8 entfernt.

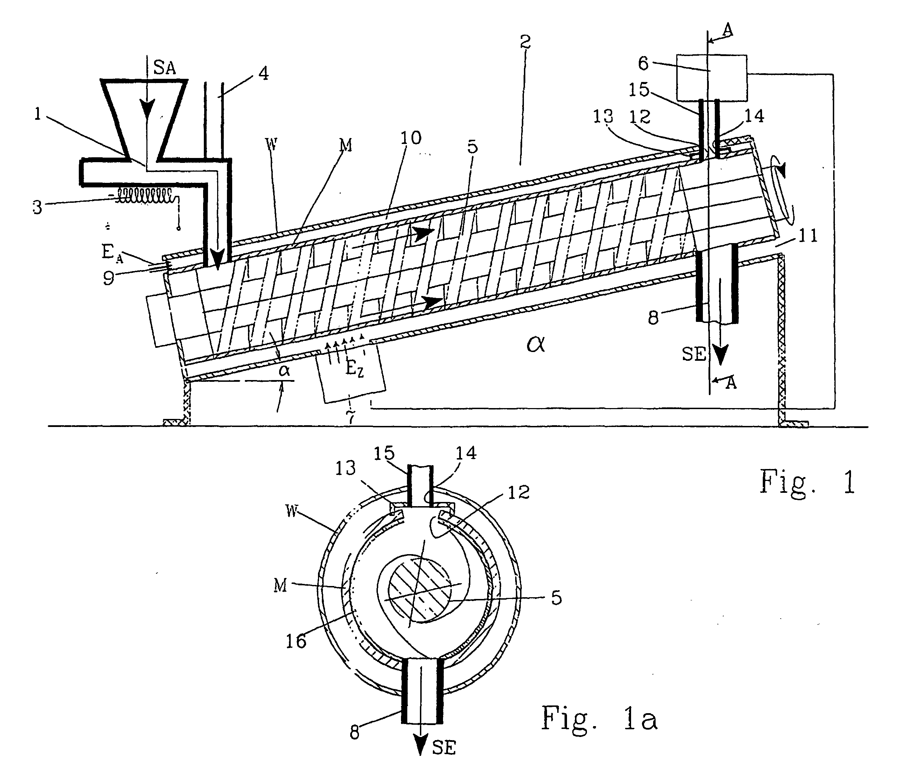

Der Reaktor 2 weist eine Außenwandung W auf, in welcher die Transportschnecke 5 im zugehörigen Schneckenmantelrohr M angeordnet ist. Zwischen der Außenwandung des Schneckenmantelrohres M und der Außenwandung W wird ein Heizraum 10 gebildet. An einem Ende des Rektors 2 befindet sich die Zuleitung 9 für das Heizmedium zum Heizraum 10 und am anderen Ende die Ableitung 11 für das Heizmedium. Im dargestellten Ausführungsbeispiel gem. Fig. 1 ist die Zuleitung 9 am Ende des Reaktors 2 angeordnet, an welchem sich die Zuführung 1 für die Ausgangssubstanz SA befindet. Am gegenüberliegenden Ende des Reaktors 2 befindet sich die Ableitung 11 für das Heizmedium, die Abführung 8 für die entölte Substanz SE und die Absaugeinrichtung 6. Zur zuverlässigen Ableitung eine oben liegende Öffnung 12 vorgesehen. Anstelle einer Öffnung können auch mehrerere Öffnungen oder ein Längsschlitz eingebracht werden. Gem Fig. 1a ist über der Öffnung 12 im Schneckenmantelrohr M ein Profil 13 angeordnet. In diesem Fall ist es als U-Profil ausgebildet. Das U-Profil 13 liegt mit den beiden Enden seiner parallelen Schenkel dicht am Schneckenmantelrohr M an. Zwischen dem Verbindungssteg der parallelen Schenkel und dem Schneckenmantelrohr M ist ein Abstand vorgesehen, der das ungehinderte Durchströmen der Öl- und Gasdämpfe gewährleistet. Im Profil 13 ist eine weitere Öffnung 14 vorgesehen, an welchem die Abgasleitung 20 dicht befestigt ist, welche die Verbindung zur Absaugeinrichtung 6 herstellt. Da die Innenwandung des Schneckenmantelrohres M einem hohen Verschleiß ausgesetzt ist, kann eine auswechselbare Innenbuchse 16 vorgesehen werden. Diese weist ebenfalls einen oben liegenden Längsschlitz auf, der unter dem Längsschlitz im Schneckenmantelrohr liegt. Ist die Innenbuchse verschlissen, kann diese einfach ausgewechselt werden.

Der Reaktor 2 ist gem Fig. 1 in einem definierten Winkel α geneigt, um die Strömungsverhältnisse für das Heizmedium und die Öl- und Gasdämpfe zu verbessern. Weiterhin wird durch die Neigung der Transportschnecke 5 die Umwälzbewegung der Ausgangssubstanzen SA begünstigt. Die Öffnung 14 im Profil 13 und das daran angeschlossene Rohr 15 befinden sich dabei am höchstgelegensten Punkt. Durch die Nutzung der abgeschiedenen Öl- und Fettdämpfe zur Beheizung des Reaktors 2 kann der Energieaufwand zum Betreiben der Anlage auf ein Minimum reduziert werden. Dem Heizraum 10 werden dabei vorzugsweise als Anschubenergie die Abgase einer industriellen Einrichtung, z.B. eines Hochofens oder eines Walzwerkes, zugeführt. Diese Anschubenergie kann in dem Maße verringert werden, wie zusätzliche Energie durch die Verbrennung der erzeugten Öl- und Fettdämpfe zur Verfügung gestellt wird. Stehen am Einsatzort der Anlage keine industriellen Abgase für die Abschubenergie zur Verfügung, kann dafür auch eine andere Beheizungsart z. B. ein zusätzlicher Ölbrenner genutzt werden.

Nach dem Anlaufen der Anlage kann diese dann wie v.g. beschrieben, durch die erzeugten Öl- und Fettdämpfe weiter beheizt werden. Genügt die durch die Verbrennung der Öl- und Fettdämpfeerzeugte Wärmemenge nicht zur Erzeugung der erforderlichen Temperatur von 280°C-400°C im Heizraum 10, wird zur Aufrechterhaltung des Prozesses durch eine Regel- und Steuereinrichtung wieder Anschubenergie zugeführt.

Zur Erhöhung des Durchsatzes können auch mehrere Transportschnecken 5 in Reihe oder Parallel neben und/oder übereinander angeordnet werden.

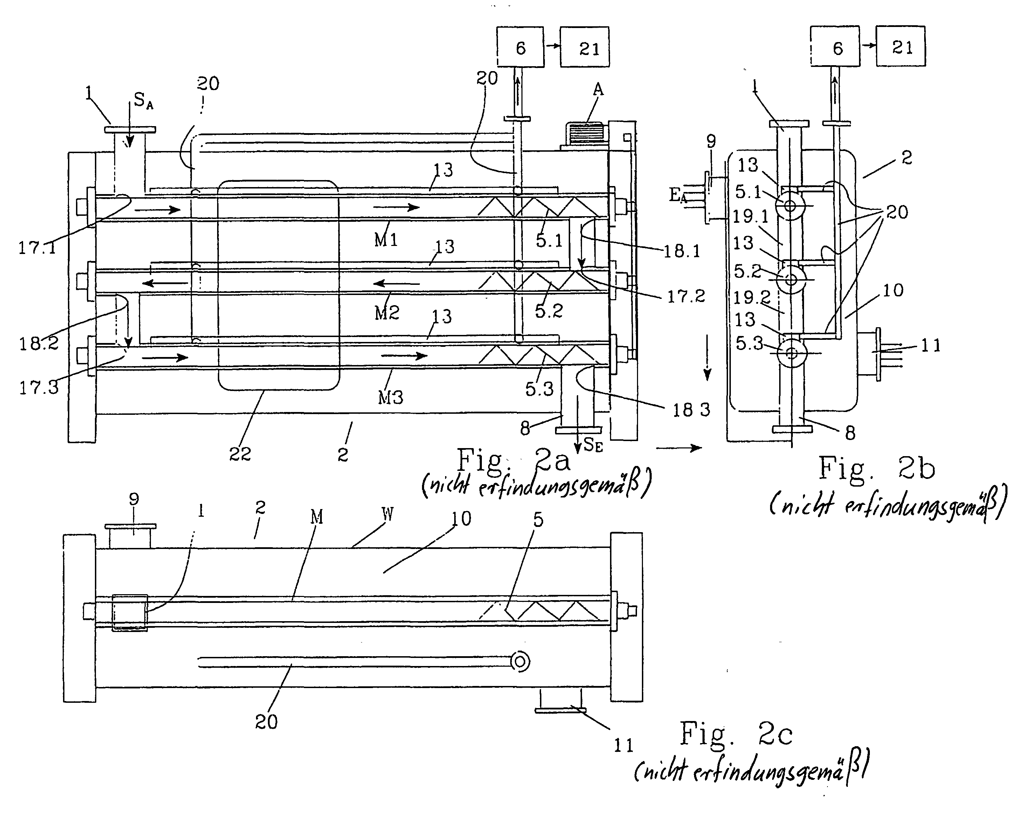

Dabei weist jedes Schneckenmantelrohr M an einem Ende einen Zuführdurchbruch und am anderen Ende einen Ableitdurchbruch auf. Bei der Reihenanordnung ist das jeweils nachgeordnete Schneckenmantelrohr M an seinem Zuführdurchbruch mit dem Ableitdurchbruch des vorgelagerten Schneckenmantelrohres M hermetisch dicht verbunden. Das erste Schneckenmantelrohr M ist mit seinem Zuführdurchbruch mit der Zuführung 1 der Ausgangssubstanz SA und das in Reihe zuletzt angeordnete Schneckenmantelrohr M mit seinem Ableitdurchbruch mit der Abführung 8 für die entölte Substanz SE ebenfalls hermetisch dicht verbunden. Es besteht auch die Möglichkeit, in einem Reaktor 2 mehrere zueinander in Reihe geschaltete Transportschnecken parallel anzuordnen.
Eine Variante, bei welcher drei Transportschnecken 5.1, 5.2, 5.3 übereinander und in Reihe in einer Außenwandung W des Reaktors 2 angeordnet sind wird in Fig. 2 gezeigt. Jede Transportschnecke 5.1, 5.2, 5.3 befindet sich in einem Schneckenmantelrohr M1, M2, M3, und ist an ihren Enden an den beiden Seitenflächen der Außenwandung W des Reaktors 2 gelagert. Der Antrieb aller drei Transportschnecken 5.1, 5.2, 5.3 erfolgt über eine gemeinsame Antriebseinheit A. Die Schnittdarstellung in Fig. 2a zeigt den Längsschnitt durch die Anlage. In der Zeichnung links befindet sich oben am Reaktor 2 die Zuführung 1 für die zu entölenden Ausgangssubstanzen SA. Dabei ist in diesem Fall keine zusätzliche Heizeinrichtung 7 zur Entwässerung vorgesehen (für Ausgangssubstanzen mit relativ geringem Feuchtigkeitsgrad). Die rohrförmige Zuführung 1 für die Ausgangssubstanz S ist hermetisch dicht mit dem Zuführdurchbruch 17.1 im ersten Schneckenmantelrohr M1 der ersten Transportschnecke 5.1 verbunden. Der Ableitdurchbruch 18.1 des ersten Schneckenmantelrohres M1 ist mit dem Zuführdurchbruch 17.2 des zweiten Schneckenmantelrohres M2 über ein erstes Verbindungsrohr 19.1 und der Ableitdurchbruch 18.2 des zweiten Schneckenmantelrohres M2 ist mit dem Zuführdurchbruch 17.3 des dritten Schneckenmantelrohres M3 über ein zweites Verbindungsrohr 19.2 hermetisch dicht verbunden. An den Ableitdurchbruch 18.3 des dritten Schneckenmantelrohres M3 schließt sich ebenfalls hermetisch dicht die Abführung 8 für die entölte Substanz SE an. Über jedem Schneckenmantelrohr M1, M2, M3 befinden sich die Profile 13, an welche die Abgasleitungen 20 angeschlossen werden. In diesem Fall sind an jedem Schneckenmantelrohr (Profil) an zwei Positionen Abgasleitungen 20 angeschlossen. Die Abgasleitungen 20 führen zu einer gemeinsamen Absaugung 6 und weiter zu einem Ölkondensator 21. Zur besseren Reinigung des Innenraumes des Reaktors kann, wie angedeutet dargestellt, eine Reinigungsöffnung 22 vorgesehen werden. Eine Seitendarstellung der Anlage gem. Fig. 2a wird in Fig. 2b dargestellt. An der Rückwand der Außenwandung W befindet sich dabei die Zuleitung 9 und an der Vorderwand die Ableitung 11 für das Heizmedium. Die Abgasleitungen 20 werden vor den Schneckenmantelrohren M1-M3 vorbeigeführt.

Aus der Draufsicht der Anlage gem. Fig. 2c wird deutlich, daß die Zuleitung 9 und die Ableitung 11 für das Heizmedium an gegenüberliegenden Enden des Reaktors 2 angeordnet sind.

Die Ausgangssubstanz SA gelangt durch die Zuführung 1 in die erste Transportschnecke 5.1 und wird in Pfeilrichtung bis zur Ableitung 8 an der dritten Transportschnecke 5.3 bewegt.

Gleichzeitig strömt das Heizmedium durch den Heizraum 10 und erwärmt die Schneckenmantelrohre M1-M3 und somit indirekt die Ausgangssubstanz SA. Die in der Ausgangssubstanz SA enthaltenen Öle und Fette werden während ihres Durchlaufes erwärmt und in die gasförmige Phase überführt. Durch die in den Schneckenmantelrohren M1 bis M3 und Profilen 13 angeordneten Öffnungen 12 und 14 gelangen die Öl- und Fettdämpfe über die daran befestigten Abgasleitungen 20 zur Aubsaugeinrichtung 6 und weiter zum Ölkondensator 21. In diesem werden die Ölund Fettdämpfe in die flüssige Phase überführt. Das entstandene Ölkondensat kann gelagert und der Wiederverwendung oder einem Verbrennungsmotor zugeführt werden. Zusätzlich kann mit einem Filter die Reinigung des Ölkondensats von eventuellen Schwebeteilchen erfolgen.

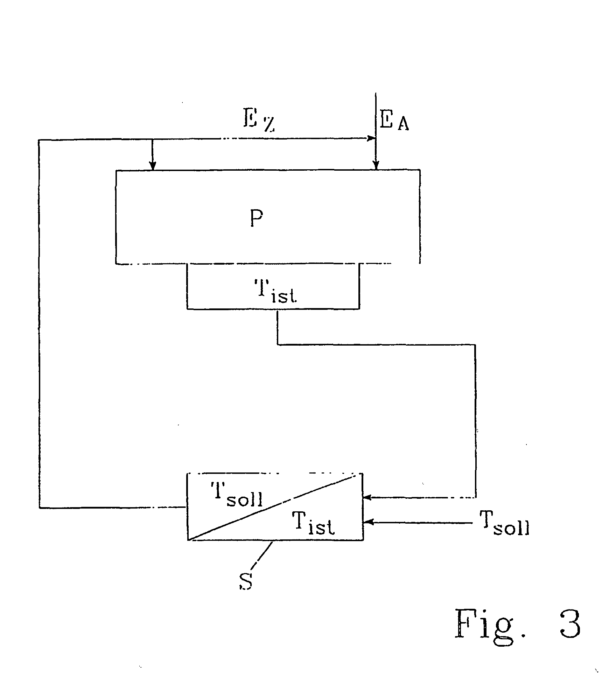

In Fig. 3 ist eine Möglichkeit der Steuer- und Regelung der Anlage in Abhängigkeit von der im Reaktor vorhandenen Temperaturen dargestellt. Die Zufuhr der Ausgangsenergie E_{A} in den laufenden Prozeß P erfolgt in Abhängigkeit von der Prozeßtemperatur Tᵢₛₜ und von der als Führungsgröße in die Steuereinheit S eingegebenen Solltemperatur Tₛₒₗₗ. Weiterhin kann dem Prozeß P bedarfsweise Zusatzenergie E_{Z} zugeführt werden, die aus der Verbrennung der abgesaugten Gase gewonnen wird. Mit einer weiteren nicht dargestellten Steuerung wird auf die Vorschub- und Umwälzbewegung der Transportschnecken Einfluß genommen. Diese kann je nach Prozeßverlauf kontinuierlich oder diskontinuierlich verlaufen. Wenn notwendig, kann nach einer Phase der Vorschubbewegung auch ein Stillstand mit einer definierten Verweildauer oder auch eine Rückwärtsbewegung der Transportschnecken und dann wieder eine Vorwärtsbewegung erfolgen.

Mit der erfindungsgemäßen Lösung wird im Vergleich zu herkömmlichen Lösungen eine einfache und köstengünstige Variante zur Entölung fettiger Ausgangssubstanzen geschaffen. Durch die Möglichkeit der Nutzung der Öl- und Fettdämpfe für die Beheizung der Anlage kann der notwendige Energieeinsatz auf ein Minimum reduziert werden. Die Anordnung mehrerer Transportschnecken neben und/oder übereinander verringert den Platzbedarf der Anlage wesentlich.

## Patentansprüche

1. Verfahren zur Entölung fettiger Substanzen wie z.B. Walzzunder, Späne, Schlämme und ölkontaminierte Mineralien, wobei die Ausgangssubstanz (SA) durch indirekte Beheizung einer thermischen Behandlung unterzogen wird und die durch die thermische Behandlung entstehenden Gas- und Fettdämpfe abgeleitet werden, wobei die zu entölenden Ausgangssubstanzen (SA) einem Reaktor (2) zugeführt werden, in dem bei einer Temperatur im Bereich von 280°C bis 400°C eine Vorschub- und Umwälzbewegung der zu entölenden Ausgangssubstanz (SA) erzeugt wird,
während der Zuführung zum Reaktor (2) die Ausgangssubstanzen (SA) durch eine Erwärmung auf 100°C bis 150°C entwässert werden,
die durch eine kontinuierliche, diskontinuierliche oder reversierende Vorschub- und Umwälzbewegung und die im Reaktor (2) herrschende Temperatur aus der Ausgangssubstanz (SA) abgespalteten und in die gasförmige Phase überführten Öle und Fette abgesaugt und anschließend die Öl- und Fettdämpfe zur indirekten Beheizung des Reaktors (2) einer Verbrennungs- und Heizeinheit (7) zugeleitet werden, wobei die weitere Beheizung des Reaktors (2) zusätzlich oder ausschließlich mit den abgeschiedenen Öl- und Fettdämpfen erfolgt.

2. Verfahren nach Anspruch 1, **dadurch gekennzeichnet, dass** zur anfänglichen indirekten Erwärmung des Reaktors (2) als Anschubenergie die Abgase einer industriellen Einrichtung, insbesondere die in einem Walzwerk bzw. Hochofen anfallenden Abgase, genutzt werden.

3. Verfahren nach Anspruch 1 oder 2, **dadurch gekennzeichnet, dass** nach Anlaufen des Entölungsvorganges die Zufuhr der Energiemenge für die indirekte Beheizung durch die industrielle Einrichtung und die Zufuhr der Energiemenge für die indirekte Beheizung durch die Verbrennung der gewonnenen Öl-Gas-Phase in Abhängigkeit von der im Reaktor (2) vorhandenen Temperatur regel- bzw. steuerbar sind.

4. Verfahren nach einem der Ansprüche 1 bis 3, **dadurch gekennzeichnet, dass** die notwendige Durchlaufzeit entsprechend der Zusammensetzung der Ausgangssubstanz (SA) und der geforderten Bedingungen für die Weiterverwendung der entölten Substanz (SE) festgelegt und vorzugsweise durch Referenzversuche ermittelt wird.

5. Anlage zur Entölung fettiger Substanzen wie z.B. Walzzunder, Späne, Schlämme und ölkontaminierte Mineralien mit einer Zuführung (1) für die fettigen Ausgangssubstanzen (SA) und einer Abführung (8) für die entfetteten Substanzen (SE), sowie mit einer indirekten Beheizung, wobei in der Außenwandung (W) eines Reaktors (2) mindestens eine Fördereinrichtung zur Erzeugung einer Vorschub- und Umwälzbewegung der. fettigen Ausgangssubstanzen (SA) angeordnet ist,
die gesamte, eine kontinuierliche, diskontinuierliche oder reversierende Vorschub- und Umwälzbewegung erzeugende Fördereinrichtung von einem Gehäuse ummantelt ist und der Raum zwischen der Außenwandung (W) des Reaktors (2) und dem Gehäuse der Fördereinrichtung von einem Heizmedium durchströmt wird,
am Reaktor (2) eine Absaugeinrichtung (6) für die durch die Beheizung entstandenen Öl- und Fettdämpfe angeordnet ist, die mit einer an der äußeren Reaktorwandung (W) angeordneten, zur Erzeugung des Heizmediums dienenden, Verbrennungs- und Heizeinheit (7) verbunden ist und
an der Zuführung (1) eine der Entwässerung der Ausgangssubstanz (SA) dienende Heizeinheit (3) angeordnet ist.

6. Anlage nach Anspruch 5, **dadurch gekennzeichnet, dass** mehrere jeweils von einem Gehäuse ummantelte Fördereinrichtungen in Reihe oder parallel neben- und/oder übereinander im Reaktor (2) angeordnet sind, wobei jede Fördereinrichtung im Gehäuse an einem Ende einen Zuführdurchbruch und am anderen Ende einen Ableitdurchbruch aufweist.

7. Anlage nach Anspruch 5 und 6, **dadurch gekennzeichnet, dass** bei der Reihenanordnung die jeweils nachgeordnete Fördereinrichtung an ihrem zuführdurchbruch mit dem Ableitdurchbruch der vorgelagerten Fördereinrichtung sowie die erste Fördereinrichtung mit ihrem Zuführdurchbruch mit der Zuführung (1) für die Ausgangssubstanz (SE) und die in Reihe zuletzt angeordnete Fördereinrichtung mit ihrem Ableitdurchbruch mit der Abführung (8) für die entölte Substanz (SE) hermetisch dicht verbunden sind.

8. Anlage nach einem der Ansprüche 5 bis 7, **dadurch gekennzeichnet, dass** die Fördereinrichtung als Transportschnecke (5, 5.1, 5.2, 5.3) ausgebildet ist, die von einem als Gehäuse dienenden Schneckenmantelrohr (M, M1, M2, M3) umgeben wird.

9. Anlage nach Anspruch 8, **dadurch gekennzeichnet, dass** zur zuverlässigen Ableitung der Öl- und Gasdämpfe im Schneckenmantelrohr (M, M1, M2, M3) mindestens eine oben liegende Öffnung (12) vorgesehen ist, die mit der Absaugeinrichtung (6) über eine Abgasleitung (20) verbunden ist und dass das Schneckenmantelrohr (M, M1, M2, M3) über seine gesamte Länge eine oder mehrere Öffnungen (12) aufweist, die mit einer profilartigen Abdeckung (14) versehen sind, wobei zur Ableitung der Öl- und Fettdämpfe ein Zwischenraum zwischen Schneckenmantelrohr (M, M1, M2, M3) und Abdeckung (14) vorhanden ist, und dass die Abdeckung (14) mindestens einen Durchbruch (15) aufweist, an welchem die Abgasleitung (20) angeschlossen wird.

10. Anlage nach Anspruch 9, **dadurch gekennzeichnet, dass** die Öffnung (12) im Schneckenmantelrohr (M, M1, M2, M3) als Längsschlitz ausgebildet ist.

11. Anlage nach Anspruch 9 oder 10, **dadurch gekennzeichnet, dass** die profilartige Abdeckung (14) als U-Profil ausgebildet ist und mit den beiden Enden ihrer parallelen Schenkel dicht am Schneckenmantelrohr (M, M1, M2, M3) anliegt und dass zwischen dem Verbindungssteg der parallelen Schenkel und dem Schneckenmantelrohr (M, M1, M2, M3) ein Abstand vorhanden ist, der das ungehinderte Durchströmen der Öl- und Gasdämpfe gewährleistet.

12. Anlage nach einem der Ansprüche 8 bis 11, **dadurch gekennzeichnet, dass** das schneckenmantelrohr (M, M1, M2, M3) eine auswechselbare Innenbuchse (16) aufweist, die über deren gesamte Länge reicht und die ebenfalls nach oben gerichtete Öffnungen aufweist, die im wesentlichen mit den Öffnungen im Schneckenmantelrohr (M, M1, M2, M3) fluchten.

13. Anlage nach einem der Ansprüche 5 bis 12, **dadurch gekennzeichnet, dass** der Reaktor (2) im Bedarfsfall in einen definierten Winkel (α) bringbar ist.

14. Anlage nach einem der Ansprüche 5 bis 13, **dadurch gekennzeichnet, dass** sich die Absaugeinrichtung (6) an dem Ende des Reaktors (2) befindet, welches höher gelegen ist.

15. Anlage nach einem der Ansprüche 5 bis 14, **dadurch gekennzeichnet, dass** die Zuleitung (9) für die Abgase an dem Ende des Reaktors (2) angeordnet ist, an dem sich die zuführung (1) befindet und dass die Ableitung (11) der Abgase am gegenüberliegenden Ende des Reaktors (2) erfolgt.

## Claims

1. A method for de-oiling greasy substances such as mill scale, shavings, slurry and oil-contaminated minerals, with the initial substance (SA) being subjected to a thermal treatment by indirect heating and the gas and grease vapors obtained from the thermal treatment are removed, with the initial substances (SA) to be de-oiled being supplied to a reactor (2) in which a forward feeding and revolving movement of the initial substance (SA) to be de-oiled is produced, while during the feed to the reactor (2) the initial substances (SA) are dehydrated by a heating to 100°C to 150°C, with the oils and greases split from the initial substance (SA) and brought to the gaseous phase by means of a continuous, discontinuous or reversing forward feed and revolving movement and the temperature prevailing in the reactor (2) being sucked off and thereafter the oil and grease vapors being supplied for indirect heating of the reactor (2) to an incineration and heating unit (7), with the further heating of the reactor (2) occurring in addition to or exclusively with the separated oil and grease vapors.

2. A method as claimed in claim 1, **characterized in that** for the initial indirect heating of the reactor (2) the exhaust gases of an industrial device, especially the exhaust gases produced in a rolling mill or blast furnace, are used as kick-start energy.

3. A method as claimed in claim 1 or 2, **characterized in that** after the start-up of the de-oiling process the supply of the energy quantity for the indirect heating by the industrial device and the supply of the energy quantity for the indirect heating by the incineration of the obtained oil-gas phase is controllable in an open-loop or closed-loop fashion depending on the temperature prevailing in the reactor (2).

4. A method as claimed in one of the claims 1 to 3, **characterized in that** the necessary processing time is determined according to the composition of the initial substance (SA) and the required conditions for further use of the de-oiled substance (SE) and is preferably determined by reference trials.

5. An installation for de-oiling greasy substances such as mill scale, shavings, slurry and oil-contaminated minerals, with a feeding device (1) for the greasy initial substances (SA) and a discharging device (8) for the de-greased substances (SE), as well as with indirect heating, with at least one conveying device for producing a forward feed and revolving movement of the greasy initial substances (SA) being arranged in the outside wall (W) of a reactor (2), with the entire conveying device producing a continuous, discontinuous or reversing forward feed and revolving movement being enclosed by a housing and the space between the outside wall (W) of the reactor (2) and the housing of the conveying device being flowed through by a heating medium, with a suction device (6) for the oil and grease vapors produced by the heating being arranged on the reactor (2), which suction device is connected with an incineration and heating unit (7) which is arranged on the outside reactor wall (W) and is used for producing the heating medium and a heating unit (3) is arranged on the feeding device (1), which heating device is used for dehydrating the initial substance (SA).

6. An installation as claimed in claim 5, **characterized in that** several conveying devices each which are enclosed by a housing are arranged in rows or parallel adjacent to each other and/or above one another in the reactor (2), with each conveying device in the housing comprising a feeding breakthrough at one end and a discharging breakthrough at the other end.

7. An installation as claimed in claim 5 and 6, **characterized in that** in the case of an arrangement in rows the respectively downstream conveying device is connected at its feeding breakthrough in a hermetically sealed manner with the discharging breakthrough of the upstream conveying device and the first conveying device is connected with its feeding breakthrough in a hermetically sealed manner with the feeding device (1) for the initial substance (■) and the feeding device which is arranged at the last place in the row is connected in a hermetically sealed manner with its discharging breakthrough with the discharging device (8) for the de-oiled substance (SE).

8. An installation as claimed in one of the claims 5 to 7, **characterized in that** the conveying device is arranged as a spiral conveyor (5, 5.1, 5.2, 5.3) which is enclosed by a worm jacket tube (M, M1, M2, M3) which is used as a housing.

9. An installation as claimed in claim 8, **characterized in that** for the purpose of reliably discharging the oil and gas vapors in the worm jacket tube (M, M1, M2, M3) at least one upwardly situated opening (12) is provided which is connected with the suction device (6) via an exhaust gas line (20) and that the worm jacket tube (M, M1, M2, M3) comprises several openings (12) over its entire length which are provided with a profile-like cover (14), with an intermediate space being provided between the worm jacket tube (M, M1, M2, M3) and the cover (14) for the purpose of discharging the oil and grease vapors, and that the cover (14) comprises at least one breakthrough (15) to which the exhaust gas line (20) is connected.

10. An installation as claimed in claim 9, **characterized in that** the opening (12) in the worm jacket tube (M, M1, M2, M3) is arranged as a longitudinal slot.

11. An installation as claimed in claim 9 or 10, **characterized in that** the profile-like cover (14) is arranged as a U-profile and rests closely on the worm jacket tube (M, M1, M2, M3) with its two ends of its parallel legs and that there is a space between the connecting web of the parallel legs and the worm jacket tube (M, M1, M2, M3) which ensures the unhindered flow of the oil and gas vapors.

12. An installation as claimed in one of the claims 8 to 11, **characterized in that** the worm jacket tube (M, M1, M2, M3) comprises an exchangeable inside bush (16) which extends over its entire length and which also comprises upwardly facing openings which are substantially in alignment with the openings in the worm jacket tube (M, M1, M2, M3).

13. An installation as claimed in one of the claims 5 to 12, **characterized in that** the reactor (2) can be brought to a defined angle (α) if required.

14. An installation as claimed in one of the claims 5 to 13, **characterized in that** the suction device (6) is situated at the end of the reactor (2) which is situated at a higher level.

15. An installation as claimed in one of the claims 5 to 14, **characterized in that** the feed line (9) for the exhaust gases is arranged at the end of the reactor (2) at which the feed line (1) is situated and that the discharge line (11) of the exhaust gases occurs at the opposite end of the reactor (2).

## Revendications

1. Procédé pour le déshuilage de matières graisseuses comme par exemple les battitures de laminage, les copeaux, les boues et les minéraux contaminés par de l'huile, la matière de départ (SA) étant soumise à un traitement thermique par chauffage indirect et les vapeurs de gaz et de graisse résultant du traitement thermique étant évacuées, où l'on achemine les matières de départ (SA) destinées à être déshuilées vers un réacteur (2) dans lequel on imprime à la matière de départ (SA) destinée à être déshuilée un mouvement circulatoire et de progression à une température comprise entre 280°C et 400°C,
l'on déshydrate les matières de départ (SA) pendant leur cheminement vers le réacteur (2) en les chauffant à une température comprise entre 100° et 150°C,
l'on évacue par aspiration les huiles et les graisses qui, agitées par la progression et la circulation continues, discontinues ou en va-et-vient et soumises à la température régnant dans le réacteur (2), se sont dégagées de la substance de départ (SA) et ont passé à la phase gazeuse et l'on alimente ensuite un bloc d'incinération et de chauffage (7) avec les vapeurs d'huile et de graisse pour chauffer indirectement le réacteur (2), le réacteur (2) étant chauffé par la suite, soit en complément, soit exclusivement, avec les vapeurs d'huile et de graisse dégagées.

2. Procédé selon la revendication 1, **caractérisé en ce que** l'on utilise comme énergie d'activation pour le chauffage initial indirect du réacteur (2) les effluents gazeux d'une installation industrielle, notamment les effluents gazeux générés par un laminoir ou un haut-fourneau.

3. Procédé selon la revendication 1 ou 2, **caractérisé en ce que**, une fois le procédé de déshuilage amorcé, l'alimentation en énergie pour le chauffage indirect par le biais de l'installation industrielle et l'alimentation en énergie pour le chauffage indirect par incinération de la phase huileuse-gazeuse sont réglables et contrôlables en fonction de la température régnant dans le réacteur (2).

4. Procédé selon l'une quelconque des revendications 1 à 3, **caractérisé en ce que** le temps de passage nécessaire est fixé et de préférence déterminé par des essais de référence en fonction de la composition de la matière de départ (SA) et des conditions requises pour l'utilisation ultérieure de la matière déshuilée (SE).

5. Installation de déshuilage de matières graisseuses comme par exemple les battitures de laminage, les copeaux, les boues et les minéraux contaminés par de l'huile avec un conduit d'amenée (1) pour les matières de départ graisseuses (SA) et un conduit d'évacuation (8) pour les matières dégraissées (SE) ainsi qu'avec un chauffage indirect, au moins un organe de transport destiné à imprimer aux matières de départ (SA) graisseuses un mouvement circulatoire et de progression étant disposé dans la paroi externe (W) d'un réacteur (2),
l'organe de transport imprimant un mouvement continu, discontinu ou de va-et-vient étant dans sa totalité logé dans un boîtier et un fluide chauffant circulant dans l'espace compris entre la paroi externe (W) du réacteur (2) et le boîtier de l'organe de transport,
un organe d'aspiration (6) destiné à aspirer les vapeurs d'huile et de graisse résultant du chauffage étant disposé sur le réacteur (2) et relié à un bloc d'incinération et de chauffage (7) disposé sur la paroi externe (W) du réacteur et servant à produire le fluide chauffant et
un élément chauffant (3) servant à déshydrater la matière de départ (SA) étant disposé sur le conduit d'amenée (1).

6. Installation selon la revendication 5, **caractérisée en ce que** plusieurs organes de transport, respectivement logés dans un boîtier, sont montés en série ou en parallèle côte à côte ou l'un par-dessus l'autre dans le réacteur (2), chaque organe de transport comportant dans le boîtier une ouverture d'amenée prévue à l'une de ses extrémités et une ouverture d'évacuation prévue à l'autre extrémité.

7. Installation selon la revendication 5 et 6, **caractérisée en ce que**, dans le cas d'un montage en série, une liaison étanche et hermétique est réalisée entre l'ouverture d'amenée de l'organe de transport située en aval et l'ouverture d'évacuation de l'organe de transport située en amont respective, entre l'ouverture d'amenée du premier organe de transport et le conduit d'amenée (1) de la matière de départ (SA) et entre l'ouverture d'évacuation du dernier organe de transport de la série et le conduit d'évacuation (8) de la matière déshuilée (SE).

8. Installation selon l'une quelconque des revendications 5 à 7, **caractérisée en ce que** l'organe de transport est conformé en forme de vis de manutention (5, 5.1, 5.2, 5.3) qui est entourée d'une gaine de protection (M, M1, M2, M3) faisant office de boîtier.

9. Installation selon la revendication 8, **caractérisée en ce que**, pour l'évacuation fiable des vapeurs d'huile et de gaz, au moins un orifice (12) est prévu sur le haut de la gaine de protection (M, M1, M2, M3) de la vis, cet orifice étant relié à l'organe d'aspiration (6) par l'intermédiaire d'un conduit pour les effluents gazeux (20), et que la gaine de protection (M, M1, M2, M3) de la vis comporte un ou plusieurs orifices (12) qui sont répartis sur toute sa longueur et sont munis d'un couvercle (14) de type profilé, un espace pour l'évacuation des vapeurs d'huile et de graisse étant ménagé entre la gaine de protection (M, M1, M2, M3) de la vis et le couvercle (14) et que le couvercle (14) comporte au moins une ouverture (15) à laquelle est raccordé le conduit pour les effluents gazeux (20).

10. Installation selon la revendication 9, **caractérisée en ce que** l'orifice (12) dans la gaine de protection (M, M1, M2, M3) de la vis est conformé en forme de fente longitudinale.

11. Installation selon la revendication 9 ou 10, **caractérisée en ce que** le couvercle (14) de type profilé est conformé en U, que les deux extrémités de ses branches parallèles sont en appui étanche contre la gaine de protection (M, M1, M2, M3) de la vis et qu'entre la base du U reliant les branches parallèles et la gaine de protection (M, M1, M2, M3) de la vis est ménagé un espace permettant le libre passage des vapeurs d'huile et de gaz.

12. Installation selon l'une quelconque des revendications 8 à 11, **caractérisée en ce que** la gaine de protection (M, M1, M2, M3) de la vis comporte une chemise intérieure (16) échangeable qui s'étend sur toute sa longueur et qui comporte également des orifices dirigés vers le haut et disposés sensiblement en ligne par rapport aux orifices ménagés dans la gaine de protection (M, M1, M2, M3) de la vis.

13. Installation selon l'une quelconque des revendications 5 à 12, **caractérisée en ce qu'**en cas de besoin le réacteur (2) est apte à être incliné d'un angle défini (α).

14. Installation selon l'une quelconque des revendications 5 à 13, **caractérisée en ce que** l'organe d'aspiration (6) est situé à l'extrémité la plus élevée du réacteur (2).

15. Installation selon l'une quelconque des revendications 5 à 14, **caractérisée en ce que** l'arrivée (9) des effluents gazeux est disposée à l'extrémité du réacteur (2) à laquelle se situe le conduit d'amenée (1) et que le rejet (11) des effluents gazeux s'effectue par l'extrémité opposée du réacteur (2).
